# EUROPÄISCHE PATENTSCHRIFT

(11) **EP 0 672 702 B1**
(45) Veröffentlichungstag und Bekanntmachung des Hinweises auf die Patenterteilung: **03.07.1996**
(21) Anmeldenummer: 95102568.3
(22) Anmeldetag: 23.02.1995
(51) Int. Cl.: C08G 77/08, C08G 77/18

(54) **Verfahren zur Herstellung von Organyloxygruppen aufweisenden Organopolysiloxanen**
Process for the preparation of organyloxy groups containing organopolysiloxanes
Procédé de préparation d'organopolysiloxanes ayant des groupes de organoxy

(30) Priorität: 23.02.1994 DE 4405851
(43) Veröffentlichungstag der Anmeldung: 20.09.1995
(73) Patentinhaber: Wacker-Chemie GmbH, D-81737 München (DE)
(72) Erfinder: Stepp, Michael, Dr., D-84489 Burghausen (DE); Oberneder, Stefan, Dr., D-84489 Burghausen (DE)

(56) Entgegenhaltungen:
- EP-A- 0 304 701
- EP-A- 0 576 166

## Beschreibung

Die Erfindung betrifft ein Verfahren zur Herstellung von Organyloxygruppen aufweisenden Organopolysiloxanen durch Umsetzung von Hydroxysiloxanen mit Organyloxysilanen sowie deren Verwendung in bei Raumtemperaturen vernetzbaren Massen.

Verfahren zur Herstellung von Organyloxygruppen aufweisenden Organopolysiloxanen sind bereits bekannt. Beispielsweise wird in US-A 5,196,497 (Bayer AG, ausgegeben am 23. März 1993) bzw. der entsprechenden EP 468 239 A2 die Umsetzung von α,ω-Dihydroxypoly(diorganosiloxanen) mit Alkoxysilanen in Anwesenheit von Alkali-Hydroxiden beschrieben, die unter Alkohol-Abspaltung zu den gewünschten endgestopperten Polysiloxanen führt. Die starken Basen besitzen eine hohe Äquilibrieraktivität und führen häufig bei zu langer Reaktionszeit oder höheren Temperaturen zu einem unerwünscht hohen Anteil von nicht-vernetzungsfähigen Monoalkoxy-Endgruppen. Eine Desaktivierung des Katalysators mit starken Säuren, wie z.B. Chlorsilanen oder Phosphorsäure, muß deshalb genau zum richtigen Zeitpunkt erfolgen. Da die Reaktionszeiten im allgemeinen im Minutenbereich liegen, kann eine bei der betrieblichen Fertigung übliche Schwankungsbreite der Reaktionszeit, d.h. der Zeit zwischen Katalysatorzugabe und Katalysatordesaktivierung, von einigen Minuten bereits ein nicht-spezifikationsgerechtes Produkt zur Folge haben. Darüberhinaus sollte die Menge an Desaktivierungsreagenz stöchiometrisch genauestens auf die eingesetzte Katalysatormenge abgestimmt sein, um insbesondere die Lagerstabilität des Endprodukts sicherzustellen. In der Praxis wird deshalb häufig ein Überschuß an Desaktivierungsreagenz eingesetzt werden müssen. Da es sich hierbei um äquilibrieraktive starke Säuren handelt, muß dieser Überschuß wieder aus dem Produkt entfernt werden.

Des weiteren wird in US 5,055,502 A (Rhone-Poulenc Chimie; ausgegeben am 8. Oktober 1991) ein Verfahren beschrieben, bei dem Zink-Chelatkomplexe die Endstopperung von OH-Polymeren mit Alkoxysilanen bei höheren Temperaturen bewirken. DE 3428840 Al (General Electric Co.; ausgegeben am 21. Februar 1985) bzw. die entsprechende GB 2144758 A offenbart Aluminium-Chelatkomplexe, die als Katalysatoren zur Alkoxy-Endstopperung von OH-Gruppen aufweisenden Organopolysiloxanen eingesetzt werden. In US 5,166,296 A (General Electric Co., ausgegeben am 24. November 1992) bzw. der entsprechenden EP 520 718 A2 wird die Herstellung von alkoxyendgestopperten Polysiloxanen aus Alkoxysilanen und OH-endständigen Polysiloxanen in Gegenwart katalytischer Mengen an Ammoniumsalzen von Carbonsäuren durchgeführt.

EP-A-0 576 166 beschreibt Dispersionen, die u.a. Teilkondensate von Methyltrimethoxysilan und, als Katalysator, Tetraalkylammonium fluorid enthalten.

Gegenstand der vorliegenden Erfindung ist ein Verfahren zur Herstellung von Organopolysiloxanen, die mindestens eine Einheit der Formel

(R¹O)₃₋ₘRₘSiO_{1/2} (I)

enthalten, worin
- R: gleich oder verschieden sein kann und Wasserstoffatom oder einwertiger, gegebenenfalls substituierter Kohlenwasserstoffrest bedeutet,
- R¹: gleich oder verschieden sein kann und einwertiger, gegebenenfalls substituierter Kohlenwasserstoffrest mit 1 bis 8 Kohlenstoffatomen bedeutet und
- m: 0, 1 oder 2 ist,
dadurch gekennzeichnet, daß
in einem 1. Schritt
Organosiliciumverbindungen (1), die mindestens eine Sigebundene Hydroxylgruppe aufweisen, ausgenommen Teilhydrolysate von Silan (2), mit mindestens einem Silan (2) der Formel

(R¹O)₄₋ₘSiRₘ (II)

und/oder dessen Teilhydrolysate,
wobei R, R¹ und m die obengenannte Bedeutung hat,
in Gegenwart von Fluoridsalz (3) umgesetzt wird und gegebenenfalls
in einem 2. Schritt
nach beendeter Umsetzung Komponente (4), welche Fluoridionen binden kann, zugesetzt wird.

Im folgenden soll der Begriff Organopolysiloxane im Rahmen dieser Erfindung auch oligomere Siloxane mitumfassen.

Bei Rest R handelt es sich bevorzugt um einwertige, gegebenenfalls substituierte Kohlenwasserstoffreste mit 1 bis 13 Kohlenstoffatomen, wobei Methyl-, Vinyl- und 3-(N-Cyclohexylamino)propylrest besonders bevorzugt sind.

Beispiele für Rest R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der α- und der β-Phenylethylrest.

Beispiele für substituierte Kohlenwasserstoffreste sind Halogenalkylreste, wie der 3,3,3-Trifluor-n-propylrest, 2,2,2,2',2',2'-Hexafluorisopropylrest, der Heptafluorisopropylrest; Halogenarylreste, wie der o-, m- und p-Chlorphenylrest; 3-Thio-1-propylrest; Acyloxyalkylreste, wie der Acetoxyethylrest und (Meth)acryloxypropylrest; sowie 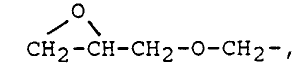 HSCH₂-, H₂NCH₂-, 4,5-Dihydroimidazol-1-yl-CH₂-, Imidazol-1-yl-CH₂-, Pyrrolidinyl-CH₂-, Piperidinyl-CH₂-, N-Morpholinyl-CH₂-, Piperazinyl-CH₂-, Cyclohexyl-NH-CH₂-, H₂N-CH₂CH₂-NH-CH₂-, H₂C=C(CH₃)COO-CH₂-, 2-Cyanoethyl-, 3-Cyanopropyl-, 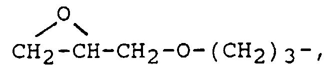 HS(CH₂)₃-, H₂N(CH₂)₃-, 4,5-Dihydroimidazol-1-yl-(CH₂)₃-, Imidazol-1-yl-(CH₂)₃-, Imidazol-1-yl-(CH₂)₃-, Pyrrolidinyl-(CH₂)₃-, Piperidinyl-(CH₂)₃-, N-Morpholinyl-(CH₂)₃-, Piperazinyl-(CH₂) ₃-, Cyclohexyl-NH-(CH₂)₃-, H₂N-CH₂CH₂-NH-(CH₂)₃- und H₂C=C(CH₃)COO-(CH₂)₃-Rest.

Beispiele für Rest R¹ sind die für R genannten Beispiele für gegebenenfalls substituierte Kohlenwasserstoffreste mit 1 bis 8 Kohlenstoffatomen.

Bei Rest R¹ handelt es sich bevorzugt um Methyl-, Ethyl-, n-Propyl-, Isopropyl-, Propen-2-yl-, n-Butyl-, sec.-Butyl- und Iso-Butylrest, wobei Methyl- und Ethylreste besonders bevorzugt sind.

Bei den im erfindungsgemäßen Verfahren eingesetzten, mindestens eine Si-gebundene Hydroxylgruppe aufweisenden Organosiliciumverbindungen (1) handelt es sich bevorzugt um solche, ausgewählt aus Organopolysiloxan mit mindestens einer Si-gebundenen Hydroxylgruppe sowie um Organosilan mit einer Hydroxylgruppe.

Bei der im erfindungsgemäßen Verfahren eingesetzten, mindestens eine Si-gebundene Hydroxylgruppe aufweisenden Organosiliciumverbindung (1) kann es sich um alle bisher bekannten Hydroxysiloxane sowie Monohydroxysilane handeln. Die erfindungsgemäß eingesetzten Hydroxysiloxane können selbstverständlich zusätzlich zu Einheiten der Formel (HO)₃₋ₜR³ₜSiO_{1/2} weitere, Si-gebundene Hydroxylgruppen aufweisende Einheiten, wie (HO)₂₋ₛR³ₛSiO_{2/2} -und HOSiO_{3/2} -Einheiten enthalten, wobei R³ eine für R angegebene Bedeutung hat, t 0, 1 oder 2 ist und s 0 oder 1 ist.

Beispiele für die erfindungsgemäß eingesetzte Organosiliciumverbindung (1) sind α,ω-Dihydroxydiorganopolysiloxane, wie beispielsweise HOMe₂Si(OSiMe₂)_{1 bis 10000}OH und HOMe₂Si(OSiMe₂)_{0 bis 10000}(OSiMeVi)_{0 bis 10000}OH, wobei dies Siloxan mindestens zwei Siliciumatome aufweist, α-Monohydroxydiorganopolysiloxane und Monohydroxysilane, wie beispielsweise
Me₃Si(OSiMe₂)_{0 bis 10000}OH ,
HMe₂Si(OSiMe₂)_{1 bis 10000}OH ,
(H₂C=CH)Me₂Si(OSiMe₂)_{0 bis 10000}OH und
(H₂C=CHCH₂)Me₂Si(OSiMe₂)_{0 bis 10000}OH ,
wobei Me Methylrest und Vi Vinylrest bedeutet,
verzweigte hydroxyfunktionelle Organopolysiloxane und hydroxyfunktionelle Organosiloxan-Harze, wie z.B. beschrieben in EP 540 039 A1 (Dow Corning Japan Ltd.), Spalte 5, Zeilen 37 bis 40 und Spalte 6, Zeile 25, wobei die Organylreste bevorzugt Methylreste sind. Weitere Beispiele sind Hydroxylgruppen aufweisende Organosiliciumverbindungen der oben genannten Art, die neben Methylgruppen noch Phenylgruppen, Vinylgruppen, 1-Thio-3-propylgruppen oder 3,3,3-Trifluorpropylgruppen enthalten.

Die erfindungsgemäß eingesetzten Hydroxysiloxane (1) haben bei 25°C eine Viskosität von vorzugsweise 1 bis 10⁶ mm²/s, besonders bevorzugt 10 bis 5.10⁵ mm²/s.

Besonders bevorzugt handelt es sich bei den erfindungsgemäß eingesetzten Organosiliciumverbindungen (1) um α,ω-Dihydroxydiorganopolysiloxane.

Bei den erfindungsgemäß eingesetzten, Hydroxylgruppen aufweisenden Organosiliciumverbindungen kann es sich um eine Art derartiger Organosiliciumverbindungen wie auch um ein Gemisch aus mindestens zwei verschiedenen Arten von Organosiliciumverbindungen handeln.

Die erfindungsgemäß eingesetzten, Hydroxylgruppen aufweisenden Organosiliciumverbindungen sind handelsübliche Produkte bzw. können nach in der Siliconchemie üblichen Verfahren hergestellt werden.

Beispiele für die erfindungsgemäß eingesetzten Silane (2) sind Si(OCH₃)₄, Si(OCH₂CH₃)₄, H₃CSi(OCH₃)₃, CH₃Si(OCH₂CH₃)₃, H₂C=CH-Si(OCH₃)₃, H₂C=CH-Si(OCH₂CH₃)₃, C₆H₅-Si(OCH₃)₃, (H₃C)₂Si(OCH₃)₂, HSi(OCH₂CH₃)₃, F₃CCH₂CH₂Si(OCH₃)₃, H₂C=CH-(CH₂)₄-Si(OCH₃)₃, N≡C-CH₂CH₂-Si(OR¹)₃, N≡C-CH₂CH₂CH₂-Si(OR¹)₃ und XCH₂CH₂CH₂Si(CR¹)₃ mit X gleich 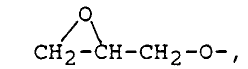 HS-, H₂N-, 4,5-Dihydroimidazol-1-yl-, Imidazol-1-yl-, Pyrrolidinyl-, Piperidinyl-, N-Morpholinyl-, Piperazinyl-, Cyclohexyl-NH-, H₂N-CH₂CH₂-NH-, 2-Cyanoethyl-, 3-Cyanopropyl- oder H₂C=C(CH₃)COO-Rest und R¹ gleich der obengenannten Bedeutung. Einige dieser Silane reagieren auch schon in Abwesenheit von Katalysatoren mit OH-funktionellen Organosiliciumverbindungen. In solchen Fällen können durch das erfindungsgemäße Verfahren Reaktionszeiten verkürzt und/oder Reaktionstemperaturen gesenkt werden, was Vorteile bei der weiteren Verarbeitung der Produkte bringen kann.

Bei den erfindungsgemäß eingesetzten Silanen (2) handelt es sich vorzugsweise um Si(OCH₃)₄, Si(OCH₂CH₃)₄, H₃CSi(OCH₃)₃, CH₃Si(OCH₂CH₃)₃, H₂C=CH-Si(OCH₃)₃, H₂C=CH-Si(OCH₂CH₃)₃, N≡C-CH₂CH₂Si(OCH₂CH₃)₃, 4,5-Dihydroimidazol-1-yl-CH₂CH₂CH₂Si(OCH₂CH₃)₃, 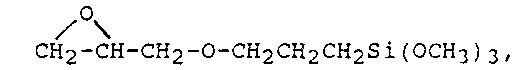 H₂C=C(CH₃)COOCH₂CH₂CH₂-Si(OCH₃)₃,
Cyclohexyl-NH-CH₂CH₂CH₂-Si(OCH₃)₃,
H₂N-CH₂CH₂-NH-CH₂CH₂CH₂-Si(OCH₃)₃, HS-CH₂CH₂CH₂-Si(OCH₃)₃
und N-Morpholinyl-CH₂CH₂CH₂-Si(OCH₃)₃,
wobei H₃CSi(OCH₃)₃, CH₃Si(OCH₂CH₃)₃, H₂C=CH-Si(OCH₃)₃,
H₂C=CH-Si(OCH₂CH₃)₃, N≡C-CH₂CH₂Si(OCH₂CH₃)₃, 4,5-Dihydroimidazol-1-yl-CH₂CH₂CH₂Si(OCH₂CH₃)₃ und Cyclohexyl-NH-CH₂CH₂CH₂-Si(OCH₃)₃ besonders bevorzugt sind.

Bei den erfindungsgemäß eingesetzten Silanen (2) kann es sich um eine einzelne Art wie auch um ein Gemisch aus mindestens zwei verschiedenen Arten derartiger Silane bzw. deren Teilhydrolysate handeln.

Werden bei dem erfindungsgemäßen Verfahren Teilhydrolysate der Silane (2) eingesetzt, so handelt es sich hierbei vorzugsweise um solche, die bei Raumtemperatur flüssig sind.

Die erfindungsgemäß eingesetzten Silane (2) bzw. deren Teilhydrolysate sind handelsübliche Produkte bzw. können nach in der Siliconchemie üblichen Verfahren hergestellt werden.

Vorteilhafterweise wird bei dem erfindungsgemäßen Verfahren Silan (2) und/oder dessen Teilhydrolysat im stöchiometrischen Überschuß bezogen auf Si-gebundene Hydroxylgruppen eingesetzt. Vorzugsweise wird Silan (2) und/oder dessen Teilhydrolysat in Mengen von 1,01 bis 20 Mol pro Mol Si-gebundene Hydroxylgruppen der Verbindung (1), besonders bevorzugt 1,01 bis 10 Mol pro Mol Si-gebundene Hydroxylgruppen der Verbindung (1), eingesetzt. Höhere Überschüsse können günstig sein, wenn die Herstellung von bei Raumtemperatur feuchtigkeitsvernetzbaren Massen auf Basis der erfindungsgemäß hergestellten Organyloxysiloxanen angestrebt wird, in denen das überschüssige Organyloxysilan als Vernetzer dient. Ein weiterer Dosiervorgang wird damit unter Umständen überflüssig, was sich besonders bei einer kontinuierlichen Herstellung von RTV-1-Massen vorteilhaft auswirken kann.

Bei dem im erfindungsgemäßen Verfahren eingesetzten Fluoridsalz (3) handelt es sich vorzugsweise um solches, ausgewählt aus der Gruppe bestehend aus Ammoniumfluoriden der Formel

[R² ₄N]F (III),

wobei R² gleich oder verschieden sein kann und eine für R angegebene Bedeutung hat, deren Addukte mit Carbonylverbindungen, wie z.B. ß-Ketocarbonsäureestern oder 1,3-Diketonen, (Alkali)metallfluoriden, wie Kaliumfluorid, Cäsiumfluorid, Zinkfluorid, Dibutylzinnfluorid und Kupferfluorid, organischen oder anorganischen Ammoniumhydrogenfluoriden, Phosphoniumfluoriden, Phosphoniumhydrogenfluoriden, Tetrafluorboraten, Hexafluorsilicaten und Fluorphosphaten.

Vorzugsweise handelt es sich bei Rest R² um den Methyl-, Ethyl-, n-Butyl-, n-Propyl-, iso-Propyl- und den Benzylrest, wobei der Methyl-, n-Butyl und Benzylrest besonders bevorzugt sind.

Bei dem im erfindungsgemäßen Verfahren eingesetzten Fluoridsalz (3) handelt es sich besonders bevorzugt um Ammoniumfluorid der Formel (III).

Beispiele für Fluoridsalz (3) sind [(H₃C(CH₂)₃)₄N]F (im folgenden kurz TBAF genannt), [(H₃C)₄N]F, [C₆H₅CH₂-N(CH₃)₃]F und [H₃CNH₃]F sowie deren Addukte mit Carbonylverbindungen, wobei als Carbonylverbindung Acetylaceton, Acetessigsäuremethylester, Acetessigsäure-2-ethylhexylester, Acetessigsäureisopropylester bevorzugt und Acetylaceton und Acetessigsäureethylester besonders bevorzugt sind.

Fluoridsalze sind handelsübliche Produkte oder nach in der organischen Chemie gängigen Verfahren herstellbar. Hierzu sei beispielsweise auf Clark, J.H., Miller, J.M. in J.Chem.Soc., Perkin Trans.I, 1977, 1743-1745 verwiesen.

Bei den erfindungsgemäß eingesetzten Fluoridsalzen (3) kann es sich um eine einzelne Art wie auch um ein Gemisch aus mindestens zwei verschiedenen Arten derartiger Fluoridsalze handeln.

Bei dem erfindungsgemäßen Verfahren kann Fluoridsalz (3) im Gemisch mit organischen Lösungsmitteln und/oder siliciumorganischen Verbindungen oder auch fixiert auf Trägermaterialien, wie Kieselsäure, Ionenaustauscher-Harz, Titandioxid oder Aluminiumoxid, eingesetzt werden. Verfahren zur Herstellung von an Trägermaterial gebundenem Fluoridsalz sind beispielsweise in Gambacorta, A., Turchetta, S., Botta, M., Synth.Commun., 1989, 19(13&14), 2441-2448; Li, C., Lu, Y., Huang, W., He, B., Synth.Commun. 1991, 21(12-13), 1315-1320; beschrieben.

Als Lösungsmittel können alle bekannten organischen Lösungsmittel eingesetzt werden, die keinen störenden Einfluß auf das Reaktionsgeschehen haben; bevorzugt handelt es sich dabei um organische Lösungsmittel, die durch Verdampfen aus dem Endprodukt leicht zu entfernen sind. Beispiele für solche Lösungsmittel sind Diethylether, Dibutylether, Tetrahydrofuran, Dioxan, Hexan, Toluol, Xylole, Chlorbenzol, 1,3-Pentandion, Aceton, Methyl-t-butylketon, Methylethylketon, 1,2-Dimethoxyethan, Acetonitril, Essigsäureethylester, Essigsäuremethylester, Essigsäurebutylester, N,N-Dimethylformamid, N,N-Dimethylacetamid, Dimethylsulfoxid, Methanol, Ethanol, n-Propanol, 2-Propanol, n-Butanol, 2-Butanol und Isobutanol sowie Gemische dieser Lösungsmittel.

Des weiteren kann bei dem erfindungsgemäßen Verfahren Fluoridsalz (3) auch im Gemisch mit Organosiliciumverbindungen, wie beispielsweise Silanen, oligomeren oder polymeren Siloxanen, eingesetzt werden.

Insbesondere im Fall der Herstellung von bei Raumtemperatur durch Feuchtigkeit vernetzbaren Abmischungen im Anschluß an die erfindungsgemäße Herstellung der Organyloxysiloxane ist es vorteilhaft, Fluoridsalz (3) in den umzusetzenden Organyloxysilanen, gegebenenfalls unter Hinzufügung der entsprechenden freien Verbindung R¹OH mit R¹ gleich der obengenannten Bedeutung oder in einem anderen flüssigen Rezepturbestandteil, wie z.B. OH-haltigem Polysiloxan oder einem häufig als Weichmacher eingesetzten, endblockierten Poly(diorganosiloxan), wie z.B. (H₃C)₃SiO-[Si(CH₃)₂O]₇₀-Si(CH₃)₃, einem oligomeren Siloxan, wie z.B. (H₃C)₃SiOSi(CH₃)₃, oder Cyclosiloxan, wie z.B. [Si(CH₃)₂O]₄, zu lösen.

Sowohl die Addukte mit Carbonylverbindungen als auch die auf Trägermaterialien aufgezogenen Ammoniumfluoride besitzen oft den Vorteil, daß sie weniger hygroskopisch und damit besser lagerfähig sind als die reinen Ammoniumfluoride.

Bei dem erfindungsgemäßen Verfahren wird Fluoridsalz (3) in Mengen von vorzugsweise 0,1 bis 1000 ppm (Gewichtsteilen je Million Gewichtsteilen), besonders bevorzugt 1 bis 100 ppm, jeweils berechnet als elementares Fluor und bezogen auf das Gesamtgewicht an Organosiliciumverbindung (1), eingesetzt. Die einzusetzende Menge an Fluoridsalz (3) ist insbesondere abhängig von der Reaktivität der einzelnen Reaktionspartner und der Gegenwart reaktionsbeschleunigender bzw. -verlangsamender Bestandteile, wie z.B. Verbindungen mit sauren oder basischen Resten oder fluoridbindenden Bestandteilen.

Die Bedingungen, unter denen das erfindungsgemäße Verfahren durchgeführt werden kann, richten sich in erster Linie nach der Reaktivität des eingesetzten Organyloxysilans (2) und nach Art und Konzentration des Fluoridsalzes (3).

Das erfindungsgemäße Verfahren wird bei Temperaturen von vorzugsweise 20 bis 100°C und einem Druck von vorzugsweise 900 bis 1100 hPa durchgeführt. Es kann jedoch auch bei höheren oder niedrigeren Temperaturen sowie höheren oder niedrigeren Drücken durchgeführt werden.

In den meisten Fällen kann das erfindungsgemäße Verfahren bei Raumtemperatur ausgeführt werden. Es kann jedoch vorteilhaft sein, z.B. wenn aus technischen Gründen eine niedrigere Viskosität der Reaktionsmischung angestrebt wird, die Reaktion bei erhöhter Temperatur durchzuführen, wobei bei sonst gleichbleibenden Bedingungen im allgemeinen mit einer Reaktionsbeschleunigung zu rechnen ist.

Das Ende der erfindungsgemäßen Umsetzung kann durch Messen des SiOH-Gehalts in der Reaktionsmischung mittels IR-Spektroskopie, ²⁹Si-NMR- bzw. ¹H-NMR-Spektroskopie oder durch einen Vernetzungstest zum Nachweis restlicher SiOH-Funktionen in Polysiloxanen nachgewiesen werden, wie z.B. durch den Vernetzungstest gemäß der oben zitierten EP 468 239 A2 oder durch Zugabe von Aluminium-tri-sek-butylat, wobei ein sofortiger Viskositätsanstieg, unter Umständen bis zur Vergelung, restliche SiOH-Gruppen und damit unvollständigen Umsatz anzeigt.

Vorzugsweise wird nach Beendigung der erfindungsgemäßen Umsetzung Fluoridsalz (3) durch Zugabe von Komponente (4), welche Fluoridionen binden kann, desaktiviert mit dem Ziel, daß unerwünschte Weiterreaktionen unterbleiben und die erfindungsgemäß hergestellten Organyloxygruppen aufweisenden Organopolysiloxane sich bei der Lagerung nicht verändern.

Beispiele für Komponente (4) sind Aluminiumverbindungen bzw. -komplexe, wie Aluminiumalkoholate, pyrogen erzeugte oder gefällte Kieselsäure, Calcium-haltige Füllstoffe, die aufgrund der hohen Bildungstendenz von Calciumfluorid zur Desaktivierung von Komponente (3) geeignet sind, wie Calciumcarbonat, Calciumsilikat, Calciumphosphat, Kreiden, deren Oberfläche mit Carbonsäuren, wie 2-Ethylhexansäure, behandelt wurde (sog. gecoatete Kreiden) sowie deren Gemische.

Vorzugsweise werden bei dem erfindungsgemäßen Verfahren als Komponente (4) Aluminiumverbindungen bzw. -komplexe eingesetzt.

Beispiele für Verbindungen und Komplexe des Aluminiums sind Aluminiumcarboxylate, Aluminiumthiolate, Aluminiumsulfonate, Aluminiumphosphonate, Aluminiumamide, Aluminium-sil(ox)anolate, Aluminiumhalogenide, Aluminiumalkoholate sowie Aluminiumalkoholate, in denen ein oder mehrere Alkoxyreste durch β-Dicarbonyl-Chelatliganden ersetzt sein können, beispielsweise Al[OCH₂CH₃]₃, Al[OCH(CH₃)(C₂H₅)]₃, Al[OCH(CH₃)₂]₃, Al[H₃C-C(O)CHC(O)-CH₃]₃, Al[OCH(CH3)2]2[H3CC(O)CHCOOCH2CH3], Aluminiumkomplexe gemäß Formel (4) der eingangs zitierten DE 34 28 840 Al, wie beispielsweise
Aluminium-di(methoxy)ethylacetoacetonat,
Aluminium-methoxy-di(ethylacetoacetonat),
Aluminium-di(isopropoxy)acetylacetonat,
Aluminium-isopropoxy-di(acetylacetonat),
Aluminium-isopropoxy-di(ethylacetoacetonat),
Aluminium-bis(trimethylsiloxy)ethylacetoacetonat,
Aluminium-bis(dimethoxymethylsiloxy)ethylacetoacetonat,
Aluminium-bis(dimethoxymethylsiloxy)acetylacetonat,
Aluminium-tri(ethylacetoacetonat),
Aluminium-bis(dimethylamino)ethylacetoacetonat,
Aluminium-1,3-propandioxyethylacetoacetonat und
Aluminium-di(isopropoxy)(methylsalicylat),
sowie Umsetzungsprodukte aus Aluminiumalkoholaten und Organyloxysilanen der Formel (II), wie z.B. Di-sek.butoxyaluminoxytriethoxysilan sowie das Umsetzungsprodukt von Aluminium-di(isopropoxy)-ethylacetoacetonat und Tetraethoxysilan.

Besonders bevorzugt wird bei dem erfindungsgemäßen Verfahren als Komponente (4) Aluminiumalkoholat eingesetzt.

Bei der erfindungsgemäß eingesetzten Komponente (4) kann es sich um eine einzelne Art wie auch um ein Gemisch aus mindestens zwei verschiedenen Arten derartiger Komponenten (4) handeln.

Die als Komponente (4) eingesetzten Aluminiumverbindungen bzw. -komplexe sind handelsübliche Produkte oder nach in der Chemie gängigen Verfahren herstellbar.

Bei dem erfindungsgemäßen Verfahren kann Aluminiumverbindung bzw. -komplex (4) im Gemisch mit organischen Lösungsmitteln und/oder siliciumorganischen Verbindungen eingesetzt werden, was bevorzugt ist.

Als Lösungsmittel und siliciumorganische Verbindungen können die gleichen eingesetzt werden, die oben im Zusammenhang mit Fluoridsalz (3) beschrieben wurden, wobei Aluminiumverbindung bzw. -komplex (4) vorzugsweise im Gemisch mit Tetrahydrofuran und/oder Polydiorganosiloxanen, wie z.B. (H₃C)₃SiO-[Si(CH₃)₂O]₇₀-Si(CH₃)₃, (H₃C)₃SiOSi(CH₃)₃ und [Si(CH₃)₂O]₄, eingesetzt wird.

Bei dem erfindungsgemäßen Desaktivierungsschritt wird vorzugsweise mindestens ein stöchiometrisches Äquivalent Aluminium in Form von Aluminiumverbindung bzw. -komplex (4) bezogen auf Fluorid zugesetzt. Besonders bevorzugt wird Aluminiumverbindung bzw. -komplex (4) in Mengen von 1,05 bis 3 Mol Aluminium pro Mol Fluorid der Komponente (3) eingesetzt.

Das erfindungsgemäße Verfahren kann kontinuierlich oder diskontinuierlich durchgeführt werden.

Die Eliminierung der erfindungsgemäßen Organyloxygruppen aufweisenden Organopolysiloxane nach der erfindungsgemäßen Umsetzung bzw. nach dem erfindungsgemäßen Desaktivierungsschritt kann nach beliebigen und bekannten Methoden erfolgen. Beispielsweise können nach dem erfindungsgemäßen Desaktivierungsschritt der Überschuß an Organyloxysilan (2), die als Spaltprodukt freigewordene Verbindung R¹OH mit R¹ gleich der obengenannten Bedeutung sowie mögliche weitere Spaltprodukte und Lösungsmittel durch Ausheizen und/oder Druckverminderung entfernt werden.

Die erfindungsgemäß hergestellten Organyloxygruppen aufweisenden Organopolysiloxane können für alle Zwecke eingesetzt werden, für die auch bisher Organopolysiloxane mit Organyloxygruppen eingesetzt wurden, wie beispielsweise für Beschichtungen zur Verbesserung der wasserabweisenden Eigenschaften von Substratoberflächen, als Haftvermittlerzusatz, als Grundierung, für Kleber, für Textilbeschichtungen, für Weichmacher (einvernetzbar, wenn Siloxan nur an einem Ende organyloxyendblockiert ist) und als Basispolymer in feuchtigkeitsvernetzbaren Organopolysiloxanmassen, insbesondere RTV-1-Massen.

Feuchtigkeitsvernetzbare Organopolysiloxanmassen und Verfahren zu deren Herstellung sind allgemein bekannt. Sie bestehen im wesentlichen aus Basispolymer, Vulkanisationskatalysatoren, Vernetzer sowie gegebenenfalls Weichmachern (i.a. nicht reaktiv endgestopperte Siliconöle), Füllstoffen, Haftvermittlern und Stabilisatoren.

Für gewisse Einsatzzwecke der erfindungsgemäß hergestellten Organyloxygruppen aufweisenden Organopolysiloxane, insbesondere bei deren Einsatz in feuchtigkeitsvernetzenden Massen, kann bei bestimmten Rezepturen die erfindungsgemäß erhaltene Reaktionsmasse ohne Eliminierung des Organylgruppen aufweisenden Organopolysiloxans eingesetzt werden. Dabei kann beispielsweise ein Überschuß des im erfindungsgemäßen Verfahren eingesetzten Silans (2) als Vernetzer dienen. Sofern in diesen Fällen pyrogene Kieselsäure als Rezepturbestandteil eingesetzt wird, kann die Menge an Aluminiumverbindung aufgrund der starken adsorptiven Bindung von Fluoridionen an die Kieselsäureoberfläche mengenmäßig stark reduziert oder auf ihre Verwendung ganz verzichtet werden.

Wesentlich für die Stabilität der feuchtigkeitsvernetzbaren Massen ist dabei nur, daß eine vollständige Reaktion der Hydroxylgruppen der Organosiliciumverbindung (1) mit dem Organyloxysilan (2) vor Zugabe der pyrogenen Kieselsäure stattgefunden hat. Das gleiche gilt für Calcium-haltige Füllstoffe oder Additive, die aufgrund der hohen Bildungstendenz von Calciumfluorid ebenfalls zur Desaktivierung geeignet sind.

Ist der Einsatz der nach dem erfindungsgemäßen Verfahren hergestellten Polysiloxane in feuchtigkeitshärtenden Organopolysiloxanmassen beabsichtigt, kann das erfindungsgemäße Verfahren auch in dem zur Herstellung der feuchtigkeitsvernetzbaren Massen vorgesehenen Mischaggregat als Eintopfverfahren oder kontinuierlich durchgeführt werden. Die Fluoridsalze (3) und die Desaktivierungsreagenzien (4) können im letzteren Fall beispielsweise mit Hilfe von Dosierpumpen in Statikmischersystemen mit dem Reaktionsmedium vereinigt werden.

Das erfindungsgemäße Verfahren hat den Vorteil, daß Organyloxygruppen aufweisende Organopolysiloxane auf einfache Weise und selektiv mit einer hohen Reaktionsgeschwindigkeit hergestellt werden können.

Die erfindungsgemäß eingesetzte Fluorid-Komponente (3) hat den Vorteil, daß sie auf die erfindungsgemäße Umsetzung stark beschleunigend wirkt und eine nur mäßige Äquilibrieraktivität besitzt.

Falls Komponente (4) zugesetzt wird, besteht ein weiterer Vorteil darin, daß durch den erfindungsgemäß durchgeführten Desaktivierungsschritt mit Aluminiumalkoholaten lagerstabile Endprodukte ohne Nachbehandlungsschritt zugänglich sind, auch wenn desaktivierende Aluminiumverbindung in geringem stöchiometrischen Überschuß eingesetzt wird.

In den nachstehend beschriebenen Beispielen beziehen sich alle Angaben von Teilen und Prozentsätzen, falls nicht anders angegeben, auf das Gewicht. Des weiteren beziehen sich alle Viskositätsangaben auf eine Temperatur von 25°C. Sofern nicht anders angegeben, wurden die nachstehenden Beispiele bei einem Druck der umgebenden Atmosphäre, also etwa 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.
- TBAF: bedeutet Tetra-n-butylammoniumfluorid
- THF: bedeutet Tetrahydrofuran

### Beispiel 1

### A) Herstellung der Aluminiumkomponente

Eine Lösung aus 210 g Aluminium-di(isopropoxy)-acetessigester-Chelat (= Al[O-CH(CH₃)₂]₂[H₃C-C(O)CHC(O)OC₂H₅]) und 319 g Tetraethoxysilan in 766 g THF wurde bei Raumtemperatur binnen 30 Minuten mit einer Mischung von 27,6 g Wasser und 230 g THF versetzt. Anschließend wurde eine Stunde am Rückfluß erhitzt. Danach wurden alle flüchtigen Bestandteile bei Raumtemperatur und 3 hPa abgezogen. Nach Filtration erhielt man 344 g einer klaren, öligen Flüssigkeit, deren Aluminiumgehalt bei 3,9 Gew.-% lag.

In einem Planetenmischer wurde eine Mischung von 2000 g eines OH-endständigen Polydimethylsiloxans mit einer Viskosität von 1000 mm²/s mit 145 g Methyltrimethoxysilan hergestellt. In diese Mischung wurden 4,3 ml einer 1,1 M-Lösung von TBFA in THF eingerührt (= 0,0047 mol F; 45 ppm F, bezogen auf das Gewicht an Hydroxysiloxan). Nach 25 Minuten wurden 7,74 g einer Lösung aus 3,87 g der oben unter A) beschriebenen Aluminiumkomponente in 3,87 g Methyltrimethoxysilan zugegeben (=0,0056 mol Al). Nach 5 Minuten Durchmischung wurden ein ²⁹Si-NMR-Spektrum und ein Gelpermeationschromatogramm von der Reaktionsmischung aufgenommen. Es zeigte sich, daß alle OH-Endgruppen durch H₃CSi(OCH₃)₂-O- Endgruppen ersetzt worden waren. Die Gelpermeationschromatographie ergab eine Molekülgrößenverteilung (unter Ausschluß des Überschusses an Methyltrimethoxysilan), die der des eingesetzten OH-endständigen Polymers entsprach.

### Beispiel 2

Eine Mischung aus 150 g eines OH-endständigen Polydimethylsiloxans mit einer Viskosität von 70000 mm²/s und 48,96 g Methyltrimethoxysilan wurde mit 1,3 ml einer 1,1 M-Lösung von TBAF in THF (0,0014 mol F, 181 ppm F, bezogen auf das Gewicht an Hydroxysiloxan) versetzt. Nach 20 Minuten wurde der Katalysator durch Zugabe von 2,6 ml einer 50 %igen Lösung von der in Beispiel 1 unter A) beschriebenen Aluminiumkomponente in Methyltrimethoxysilan (0,0019 mol Al) desaktiviert. Anschließend wurden flüchtige Bestandteile bis 80°C/12 hPa abdestilliert. Als Rückstand verblieben 155 g eines klaren farblosen Öls, dessen mittlere Formel aus dem ²⁹Si-NMR-Spektrum erhalten wurde: MeSi(OMe)₂-(SiMe₂O)₄₄- S₁(OMe)₂Me.

### Vergleichsbeispiel 1

Eine Mischung aus 100 g eines OH-endständigen Polydimethylsiloxans mit einer Viskosität von 1000 mm²/s und 14,8 g Methyltrimethoxysilan wurde mit 0,55 ml einer 10 %igen Lösung von Aluminiumtri-sek.-butylat in THF versetzt, woraufhin schlagartig die Bildung gelartiger Bezirke auftrat, was als Hinweis auf unvollständige Absättigung der Si-OH-Gruppen des OH-endständigen Polydimethylsiloxans zu interpretieren ist. Im ²⁹Si-NMR-Spektrum waren neben Methyltrimethoxysilan und den Dimethylsiloxy-Einheiten des OH-Polymers nur HO-Si(CH₃)₂-O- aber keine H₃CSi(OCH₃)₂-O-Endgruppen erkennbar.

### Beispiel 3

In einem Planetenmischer wurde eine Mischung von 2000 g eines OH-endständigen Polydimethylsiloxans mit einer Viskosität von 1000 mm²/s mit 145 g Methyltrimethoxysilan hergestellt. In diese Mischung wurden 4,3 ml einer 1,1 M-Lösung von TBAF in THF eingerührt (= 0,0047 mol F; 45 ppm F, bezogen auf das Gewicht an Hydroxysiloxan). Nach zwei Tagen Lagerung bei 25°C konnten anhand des ²⁹Si-NMR-Spektrums Produkte von Polymerabbaureaktionen (Äquilibrierung) nachgewiesen werden: der Anteil nicht vernetzungsfähiger Monomethoxy-Endgruppen lag bei 20 Mol-% bezogen auf alle Endgruppen (80 Mol-% H₃CSi(OCH₃)₂-Endgruppen); der Kettenverlängerungsanteil, d.h. der Anteil an eingebauten Si(CH₃)OCH₃-Gruppen, lag in der gleichen Größenordnung. Außerdem war Dimethyldimethoxysilan nachweisbar.

### Beispiel 4

### B) Herstellung von Katalysator-Lösung F

195 ml einer 40 %igen wäßrigen Lösung von Tetra-n-butylammoniumhydroxid wurden mit 150 ml 4 %iqer Flußsäure versetzt. Der pH-Wert der Lösung lag bei 7. Nach Zufügen von 60 g 2,5-Pentandion wurden am Rotationsverdampfer bei 40°C/1 hPa alle flüchtigen Bestandteile abdestilliert. 5,5 g des festen Rückstands wurden in 30 ml Methyltrimethoxysilan gelöst. Man erhielt eine klare rotbraune Lösung mit einem Fluorid-Gehalt von 0,014 g/ml.

Eine Mischung aus 100 g eines OH-endständigen Polydimethylsiloxans mit einer Viskosität von 1000 mm²/s und 7,4 g Methyltrimethoxysilan wurde mit 0,1 ml der oben unter B) beschriebenen Katalysator-Lösung F (= 0,000074 mol F; 14 ppm F, bezogen auf das Gewicht an Hydroxysiloxan) versetzt und 20 Minuten gerührt. Der Katalysator wurde durch Zugabe von 0,55 ml einer 10 %igen Lösung von Aluminiumtri-sek.-butylat in THF (0,000223 mol Al) desaktiviert. Wie ein Vernetzungstest zeigte (Zugabe von Aluminiumtri-sek-butylat zu kleinen, der Reaktionsmischung nach bestimmten Zeitintervallen entnommenen Proben), waren bereits nach 15 Minuten alle SiOH-Gruppen im gewünschten Sinne umgesetzt (keine Vergelung mehr mit Aluminiumtri-sek.butylat). Anhand des ²⁹Si-NMR-Spektrums war erkennbar, daß alle OH-Endgruppen in H₃CSi(OCH₃)₂-Endgruppen umgewandelt worden waren.

### Beispiel 5

Die in Beispiel 4 beschriebene Arbeitsweise wurde wiederholt mit der Änderung, daß anstelle von 0,1 ml 0,2 ml der Katalysator-Lösung F (= 0,000147 mol F; 28 ppm F, bezogen auf das Gewicht von Hydroxysiloxan) zugegeben wurden. Anhand des Vernetzungstests auf Rest-SiOH war erkennbar, daß bereits nach 10 Minuten die Umsetzung beendet war. Dennoch wurde erst nach 20 Minuten mit der Aluminiumkomponente desaktiviert. Das ²⁹Si-NMR-Spektrum war identisch zu dem aus Beispiel 4.

### Beispiel 6

Die in Beispiel 4 beschriebene Arbeitsweise wurde wiederholt mit der Änderung, daß anstelle von 0,1 ml 0,3 ml der Katalysator-Lösung F (= 0,00022 mol F; 42 ppm F, bezogen auf das Gewicht von Hydroxysiloxan) zugegeben wurden. Anhand des Vernetzungstests auf Rest-SiOH war erkennbar, daß bereits nach 5 Minuten die Umsetzung beendet war. Dennoch wurde erst nach 20 Minuten mit der Aluminiumkomponente desaktiviert. Das ²⁹Si-NMR-Spektrum war identisch zu dem aus Beispiel 4.

Das ²⁹Si-NMR-Spektrum einer Probe, die einer 7-tägigen Hitzelagerung in einer verschlossenen Polyethylen-Flasche im Trockenschrank bei 80°C unterzogen worden war, zeigte gegenüber dem Ausgangsspektrum keine Veränderung.

### Beispiel 7

Die in Beispiel 5 beschriebene Arbeitsweise wurde wiederholt mit der Änderung, daß anstelle von 0,2 ml der in Beispiel 4 unter B) beschriebenen Katalysator-Lösung F 0,2 ml einer 1,1 M TBAF-Lösung in THF (0,00022 mol F) zugegeben wurden. Nach 20 Minuten erfolgte die Desaktivierung mit 1,1 ml einer 10 %igen Lösung von Aluminiumtri-sek.-butylat in THF (0,00045 mol Al). Das ²⁹Si-NMR-Spektrum war identisch zu dem aus Beispiel 5.

Das ²⁹Si-NMR-Spektrum einer Probe, die einer 7-tägigen Hitzelagerung in einer verschlossenen Polyethylen-Flasche im Trockenschrank bei 80°C unterzogen worden war, zeigte gegenüber dem Ausgangsspektrum keine Veränderung.

### Beispiel 8

Die in Beispiel 7 beschriebene Arbeitsweise wurde wiederholt mit der Änderung, daß nach 20 Minuten die Desaktivierung mit 2,2 ml anstelle von 1,1 ml einer 10 %igen Lösung von Aluminiumtri-sek.-butylat (0,00089 mol Al) erfolgte. Das ²⁹Si-NMR-Spektrum war identisch zu dem aus Beispiel 5.

Das ²⁹Si-NMR-Spektrum einer Probe, die einer 7-tägigen Hitzelagerung in einer verschlossenen PE-Flasche im Trockenschrank bei 80°C unterzogen worden war, zeigte gegenüber dem Ausgangsspektrum keine Veränderung.

### Vergleichsbeispiel 2

Eine Mischung aus 100 g eines OH-endständigen Polydimethylsiloxans mit einer Viskosität von 1000 mm²/s und 10 g Methyltrimethoxysilan wurde mit einer Mischung aus 0,2 ml einer 1,1 M-Lösung von TBAF in THF (0,00022 mol F) und 0,6 ml einer 10 %igen Lösung von Aluminiumtri-sek.butylat in THF (0,00024 mol Al) versetzt. Anhand des ²⁹Si-NMR-Spektrums der Reaktionsmischung war erkennbar, daß keine Umsetzung stattgefunden hatte.

### Beispiel 9

Eine Mischung aus 100 g eines OH-endständigen Polydimethylsiloxans mit einer Viskosität von 1000 mm²/s und 12,7 g 3-Glycidoxypropyl-trimethoxysilan (H₂C(O)CHCH₂O(CH₂)₃-Si(OCH₃)₃) wurde mit 0,2 ml einer 1,0 M-Lösung von TBAF in THF (0,0002 mol F, 38 ppm F, bezogen auf das Gewicht an Hydroxysiloxan) versetzt. Nach 45 Minuten wurde mit 0,55 ml einer 10 %igen Lösung von Aluminiumtri-sek.butylat in THF (0,00022 mol Al) desaktiviert. Im ²⁹Si-NMR-Spektrum der Mischung zeigte sich, daß alle SiOH-Funktionen in Si-OSi(OCH₃)₂-(CH₂)₃-OCH₂-CH(O)CH₂ umgewandelt worden waren. Der Überschuß an eingesetztem Silan konnte durch Ausheizen bei 110°C/0,1 hPa an einem Dünnschichtverdampfer entfernt werden.

### Beispiel 10

Eine Mischung aus 100 g eines OH-endständigen Polydimethylsiloxans mit einer Viskosität von 1000 mm²/s und 13,4 g 3-Methacryloxypropyl-trimethoxysilan (H₂C=C(CH₃)COO(CH₂)₃-Si(OCH₃)₃) wurde mit 0,2 ml einer 1,0 M-Lösung von TBAF in THF (0,0002 mol F, 38 ppm F, bezogen auf das Gewicht von Hydroxysiloxan) versetzt. Nach 25 Minuten wurde mit 0,55 ml einer 10 %igen Lösung von Aluminiumtri-sek.butylat in THF (0,00022 mol Al) desaktiviert. Im ²⁹Si-NMR-Spektrum der Mischung zeigte sich, daß alle SiOH-Funktionen in Si-OSi(OCH₃)₂-(CH₂)₃-OOC(CH₃)C=CH₂ umgewandelt worden waren. Der Überschuß an eingesetztem Silan konnte durch Ausheizen bei 110°C/0,1 hPa an einem Dünnschichtverdampfer entfernt werden.

### Beispiel 11

Eine Mischung aus 100 g eines OH-endständigen Polydimethylsiloxans mit einer Viskosität von 1000 mm²/s und 14,2 g 3-(N-Cyclohexylamino)propyl-trimethoxysilan ( Cyclohexyl-HN-(CH₂)₃-Si(OCH₃)₃) wurde mit 0,2 ml einer 1,1 M-Lösung von TBAF in THF (0,00022 mol F, 42 ppm F, bezogen auf das Gewicht an Hydroxysiloxan) versetzt. Nach 15 Minuten wurde mit 0,22 g der in Beispiel 1 unter A) beschriebenen Aluminiumkomponente (0,0003 mol Al) desaktiviert. Im ²⁹Si-NMR-Spektrum der Mischung zeigte sich, daß alle SiOH-Funktionen in Si-OSi(OCH₃)₂-(CH₂)₃-NH(Cyclohexyl) umgewandelt worden waren.

### Beispiel 12

Eine Mischung aus 100 g eines OH-endständigen Polydimethylsiloxans mit einer Viskosität von 1000 mm²/s und 8,9 g Triethoxysilan wurde mit 0,2 ml einer 1,0 M-Lösung von TBAF in THF (0,0002 mol F, 38 ppm F, bezogen auf das Gewicht an Hydroxysiloxan) versetzt. Nach 15 Minuten wurde mit 0,55 ml einer 10 %igen Lösung von Aluminiumtri-sek.butylat in THF (0,00022 mol Al) desaktiviert. Im ²⁹Si-NMR-Spektrum der Mischung zeigte sich, daß alle SiOH-Funktionen in Si-OSiH(OCH₂CH₃)₂ umgewandelt worden waren.

### Beispiel 13

Eine Mischung aus 100 g eines OH-endständigen Polydimethylsiloxans mit einer Viskosität von 1000 mm²/s und 6,5 g Dimethyldimethoxysilan wurde mit 0,2 ml einer 1,0 M-Lösung von TBAF in THF (= 0,0002 mol F, 38 ppm F, bezogen auf das Gewicht an Hydroxysiloxan) versetzt. Nach 15 Minuten wurde mit 0,55 ml einer 10 %igen Lösung von Aluminiumtri-sek.butylat in THF (0,00022 mol Al) desaktiviert. Im ²⁹Si-NMR-Spektrum der Mischung zeigte sich, daß alle SiOH-Funktionen in Si-OSi(CH₃)₂OCH₃ umgewandelt worden waren.

### Beispiel 14

Eine Mischung aus 50 g eines OH-endständigen verzweigten Polydimethylsiloxans der mittleren Zusammensetzung [HOSi(CH₃)₂O_{1/2}]₄[Si(CH₃)₂O]₅₂[SiO₂]_{1,2} (hergestellt durch schonende Hydrolyse eines in Gegenwart von PNCl₂ hergestellten Umsetzungsproduktes aus SiCl₄ und einem OH-endständigen Polydimethylsiloxan mit einer Viskosität von 5 Pas) und 35,4 g Methyltrimethoxysilan wurde mit 1 ml einer 1,0 M-Lösung von TBAF in THF (= 0,001 mol F, 380 ppm F, bezogen auf das Gewicht an Hydroxysiloxan) versetzt. Nach 10 Minuten wurde mit 2,7 ml einer 10 %igen Lösung von Aluminiumtri-sek.butylat in THF (0,001 mol Al) desaktiviert. Im ²⁹Si-NMR-Spektrum der Mischung zeigte sich, daß alle SiOH-Funktionen in Si-OSi(OCH₃)₂CH₃ umgewandelt worden waren.

### Beispiel 15

Eine Mischung aus 100 g eines OH-endständigen Polydimethylsiloxans mit einer Viskosität von 1000 mm²/s und 7,4 g Methyltrimethoxysilan wurde bei 75°C mit 0,2 ml einer 1,0 M-Lösung von TBAF in THF (= 0,0002 mol F, 42 ppm F, bezogen auf das Gewicht an Hydroxysiloxan) versetzt. Nach 4 Minuten zeigte der Vernetzungstest auf SiOH (Aluminiumsek.-butylat) vollständigen Umsatz an. Es wurde daraufhin mit 0,55 ml einer 10 %igen Lösung von Aluminiumtri-sek.butylat in THF (0,00022 mol Al) desaktiviert. Im ²⁹Si-NMR-Spektrum der Mischung zeigte sich, daß alle SiOH-Funktionen in Si-OSi(OCH₃)₂CH₃ umgewandelt worden waren.

### Vergleichsbeispiel 3

Eine Mischung aus 163 g eines OH-endständigen Polydimethylsiloxans mit einer Viskosität von 1000 mm²/s und 24,5 g Tetraethoxysilan wurde mit 2 g einer Lösung von 2 g NaOH in 47,5 g Tetraethoxysilan und 0,5 g Ethanol versetzt (= 0,002 mol NaOH). Nach 15 Minuten erfolgte Neutralisation der Base mit 0,2 g Dimethyldichlorsilan (= 0,0031 mol Cl). Anschließend wurde bei 50°C/2 hPa alles Flüchtige abgezogen. Im ²⁹Si-NMR-Spektrum der Mischung, welches nach drei Tagen aufgenommen wurde, zeigte sich, daß alle SiOH-Funktionen in Si-OSi(OCH₂CH₃)₃ umgewandelt worden waren.

### Vergleichsbeispiel 4

Vergleichsbeispiel 3 wurde wiederholt mit dem Unterschied, daß nach der Neutralisation flüchtige Bestandteile nicht abdestilliert wurden. Im ²⁹Si-NMR-Spektrum der Mischung, welches nach drei Tagen aufgenommen wurde, zeigte sich, daß die gewünschten Triethoxysilylendgruppen nur noch in Spuren vorhanden waren, stattdessen waren hauptsächlich nicht-vernetzungsfähige Si-OSi(CH₃)₂(OCH₂CH₃)-Funktionen erkennbar.

### Beispiel 16

In einem Planetenmischer wurden 1000 g eines OH-endständigen Polydimethylsiloxans, das eine Viskosität von 80 Pas besaß, mit einem Gemisch aus 90,9 g Methyltrimethoxysilan und 2,7 ml einer 1,1 M-Lösung von TBAF in THF (= 0,003 mol F, 56 ppm F, bezogen auf das Gewicht an Hydroxysiloxan) versetzt. Man rührte die Mischung 25 Minuten bei Raumtemperatur bevor mit 24,3 g einer 10 %igen Lösung von Aluminiumtri-sek.-butylat in einem trimethylsilylendgestopperten Poly(dimethylsiloxan) (= 0,01 mol Al), das eine Viskosität von 100 mm²/s besaß, desaktiviert wurde. Anschließend wurden nacheinander 524 g dieses Polydimethylsiloxans mit Trimethylsilyl-Endgruppen, 72,7 g Hexamethyldisilazan, 254,4 g einer hydrophoben, pyrogenen Kieselsäure mit einer spezifischen Oberfläche von 120 m²/g und 4,91 g Dibutylzinndiacetat zugemischt. Die Hälfte der erhaltenen Paste wurde in einer Schichtdicke von 2 mm 14 Tage lang bei Raumtemperatur an Luft ausgehärtet. Man erhielt ein elastisches Vulkanisat, das folgende mechanischen Werte lieferte:
Reißfestigkeit (DIN 53504): 0,9 N/mm²
Reißdehnung (DIN 53504): 340 %
Spannungswert bei 100 % Dehnung (DIN 53504): 0,3 N/mm²
Weiterreißwiderstand (ASTM D 624 B-91): 4,3 N/mm²
Härte (Shore A) (DIN 53505): 17

Zur Überprüfung der Lagerfähigkeit wurde die andere Hälfte der Paste in Polyethylen-Kartuschen vor dem Zutritt von Luftfeuchtigkeit geschützt. Nach 3 Wochen Lagerung bei 50°C zeigte die Paste beim Ausspritzen keine Vernetzungserscheinungen, härtete aber anschließend unter dem Einfluß der Luftfeuchtigkeit zu einem Elastomer aus.

### Vergleichsbeispiel 5 (In Analogie zu Beispiel 1 der oben zitierten EP 468239 A2)

Eine Mischung aus 145 g eines OH-endständigen Polydimethylsiloxans mit einer Viskosität von 1000 mm²/s (ca. 0,0178 mol OH) und 10 g Methyltrimethoxysilan (0,0735 mol) wurde mit 0,9 g einer Lösung von 2 g NaOH in 47,5 g Methyltrimethoxysilan und 0,5 g Methanol versetzt (= 0,0009 mol NaOH). Nach 5 Minuten erfolgte Neutralisation der Base mit 0,73 g einer Lösung aus 5 g Dimethyldichlorsilan in 45 g Hexamethyldisiloxan (= 0,0011 mol Cl). Anschließend wurde 2 Stunden bei 140°C/25 hPa ausgeheizt. Als Rückstand verblieben 132 g eines trüben Öls mit einer Viskosität von 979 mm²/s. Aus dem ²⁹Si-NMR-Spektrum des Produkts wurde folgende mittlere Formel erhalten: [MeSi(OMe)₂O_{1/2}]₂[SiMe₂O]₂₂₀. Die SiOH-Endstopperung war vollständig.

### Vergleichsbeispiel 6

Die in Vergleichsbeispiel 5 beschriebene Arbeitsweise wurde wiederholt mit der Abänderung, daß die Base erst nach 10 Minuten neutralisiert wurde. Als Endprodukt erhielt man 138 g eines trüben Öls mit einer Viskosität von 427 mm²/s. Aus dem ²⁹Si-NMR-Spektrum des Produkts wurde folgende mittlere Formel erhalten:

[MeOSiMe₂O_{1/2}]₂[Me(MeO)SiO][MeSiO_{3/2}]_{0,5}[SiMe₂O]₁₁₀.

Die SiOH-Endstopperung war zwar vollständig, doch hatten bereits durch Verlängerung der Reaktionszeit um 5 Minuten gegenüber Vergleichsbeispiel 5 Umlagerungen in einem Ausmaß stattgefunden, daß die erwünschte MeSi(OMe)₂-Endgruppe nur noch in Spuren vorhanden war.

### Beispiel 17

### C) Herstellung von Katalysator-Lösung F1

Eine Lösung von 17,4 g Kaliumfluorid in 30 ml vollentsalztem Wasser wurde mit 60 ml 25%iger Schwefelsäure versetzt. Nach 30 Minuten erfolgte Neutralisation mit 180 ml einer ca. 40 %igen wäßrigen Lösung von Tetra-n-butylammoniumhydroxid. Anschließend wurde mit 200 ml THF extrahiert. Das Extrakt wurde am Rotationsverdampfer bis zur Trockne eingeengt, der Rückstand in 300 ml Methyltrimethoxysilan aufgenommen. Anschließend wurden bei 25°C/10hPa flüchtige Bestandteile abgezogen. Die Mischung wurde filtriert. Man erhielt 192 g einer farblosen, klaren Flüssigkeit mit einem Fluorid-Gehalt von 0,6 Mol/l.

Der Vorteil dieser Verfahrensweise liegt darin, daß das hygroskopische Tetrabutylammoniumfluorid mit Methyltrimethoxysilan praktisch getrocknet wird. Restliche Feuchtigkeit führte in Gegenwart des Fluorids zu Hydrolyse bzw. Kondensation des Methyltrimethoxysilans. Es bilden sich flüssige Oligomere von Methyltrimethoxysilan und ein unlöslicher Niederschlag von Methylkieselsäure, der durch einfache Filtration abgetrennt werden kann.

Eine Mischung aus 100 g eines OH-endständigen Polydimethylsiloxans mit einer Viskosität von 1000 mm²/s und 7,4 g Methyltrimethoxysilan wurde mit 0,2 ml der oben unter C) beschriebenen Katalysator-Lösung F1 (= 23 ppm F, bezogen auf das Gewicht an Hydroxysiloxan) versetzt und 20 Minuten gerührt. Der Katalysator wurde durch Zugabe von 0,7 ml einer 10 %igen Lösung von Aluminiumtri-sek. -butylat in Hexamethyldisiloxan desaktiviert. Wie ein Vernetzungstest zeigte (Zugabe von Aluminiumtri-sek-butylat zu kleinen, der Reaktionsmischung nach bestimmten Zeitintervallen entnommenen Proben), waren bereits nach 10 Minuten alle SiOH-Gruppen im gewünschten Sinne umgesetzt (keine Vergelung mehr mit Aluminiumtri-sek.butylat). Anhand des ²⁹Si-NMR-Spektrums war erkennbar, daß alle OH-Endgruppen in H₃CSi(OCH₃)₂-Endgruppen umgewandelt worden waren.

### Beispiel 18

Die in Beispiel 17 beschriebene Arbeitsweise wurde wiederholt mit der Abänderung, daß 0,2 ml der in Beispiel 17 unter C) hergestellten Katalysator-Lösung F1 eingesetzt wurden (= 23 ppm F, bezogen auf das Gewicht an Hydroxysiloxan), welche für eine Dauer von 7 Tagen bei einer Temperatur von 70°C in einer Polyethylen-Flasche gelagert wurde. Wie ein Vernetzungstest zeigte (Zugabe von Aluminiumtri-sek-butylat zu kleinen, der Reaktionsmischung nach bestimmten Zeitintervallen entnommenen Proben), waren bereits nach 10 Minuten alle SiOH-Gruppen im gewünschten Sinne umgesetzt (keine Vergelung mehr mit Aluminiumtri-sek.butylat). Anhand des ²⁹Si-NMR-Spektrums war erkennbar, daß alle OH-Endgruppen in H₃CSi(OCH₃)₂-Endgruppen umgewandelt worden waren.

### Beispiel 19

Eine Mischung aus 100 g eines OH-endständigen Polydimethylsiloxans mit einer Viskosität von 1000 mm²/s und 11,7 g 2-Cyanoethyltriethoxysilan wurde mit 0,2 ml einer 1,0 M-Lösung von TBAF in THF (0,0002 mol F, 38 ppm F, bezogen auf das Gewicht an Hydroxysiloxan) versetzt. Wie ein Vernetzungstest zeigte (Zugabe von Aluminiumtri-sek-butylat zu kleinen, der Reaktionsmischung nach bestimmten Zeitintervallen entnommenen Proben), waren bereits nach 10 Minuten alle SiOH-Gruppen im gewünschten Sinne umgesetzt (keine Vergelung mehr mit Aluminiumtri-sek.butylat). Nach dieser Zeit wurde mit 0,65 ml einer 10 %igen Lösung von Aluminiumtri-sek.butylat in Hexamethyldisiloxan (0,00026 mol Al) desaktiviert. Im ²⁹Si-NMR-Spektrum der Mischung zeigte sich, daß alle SiOH-Funktionen in -Si-O-Si(OCH₂CH₃)₂-(CH₂)₂-C=N umgewandelt worden waren und das Verhältnis der Endgruppen/Dimethylsiloxy-Einheiten sich gegenüber dem Ausgangswert nicht verändert hatte. Das ²⁹Si-NMR-Spektrum einer Probe, die einer 7-tägigen Hitzelagerung bei 70°C in einer verschlossenen Polyethylenflasche unterzogen worden war, zeigte keine Bildung von Monoethoxy-Endgruppen und/oder Verzweigungen.

### Beispiel 20

Eine Mischung aus 100 g eines OH-endständigen Polydimethylsiloxans mit einer Viskosität von 1000 mm²/s und 15,0 g N-[(3-Triethoxysilyl)-propyl]-4,5-dihydro-imidazol (käuflich erhältlich unter der Bezeichnung "Dynasilan IMEO" bei der Hüls AG, Marl) wurde mit 0,1 ml der in Beispiel 17 unter C) beschriebenen Katalysator-Lösung F1 (0,00006 mol F, 11 ppm F, bezogen auf das Gewicht an Hydroxysiloxan) versetzt. Da bei dem Vernetzungstest gemäß Beispiel 19 mit Aluminiumtri-sek-butylat nach 20 Minuten keine Vergelung mehr an entnommenen Proben eintrat, wurde nach dieser Zeit mit 0,16 ml einer 10 %igen Lösung von Aluminiumtri-sek.butylat in Hexamethyldisiloxan (0,000065 mol Al) desaktiviert. Im ²⁹Si-NMR-Spektrum der Mischung zeigte sich, daß alle SiOH-Funktionen in Si-OSi(OCH₂CH₃)₂-(CH₂)₃-N-Dihydroimidazol umgewandelt worden waren und das Verhältnis der Endgruppen/Dimethylsiloxy-Einheiten sich gegenüber dem Ausgangswert nicht verändert hatte.

### Beispiel 21

Eine Mischung aus 100 g eines OH-endständigen Polydimethylsiloxans mit einer Viskosität von 1000 mm²/s und 0,9 g N-[(3-Triethoxysilyl)-propyl]-4,5-dihydro-imidazol (käuflich erhältlich unter der Bezeichnung "Dynasilan IMEO" bei der Hüls AG, Marl) und 7,6 g Vinyltriethoxysilan wurde mit 0,2 ml einer 1,0 M-Lösung von TBAF in THF (0,0002 mol F, 38 ppm F, bezogen auf das Gewicht an Hydroxysiloxan) versetzt. Nach dem in Beispiel 19 beschriebenen Vernetzungstest wurde der Endpunkt der Umsetzung bestimmt. Da nach 20 Minuten keine Vergelung mehr an entnommenen Proben eintrat, wurde nach dieser Zeit mit 0,65 ml einer 10 %igen Lösung von Aluminiumtri-sek.butylat in Hexamethyldisiloxan (0,00026 mol Al) desaktiviert. Im ²⁹Si-NMR-Spektrum der Mischung zeigte sich, daß praktisch alle SiOH-Funktionen in Si-OSi(OCH₂CH₃)₂-CH=CH₂ umgewandelt worden waren und das Verhältnis der Endgruppen/Dimethylsiloxy-Einheiten sich gegenüber dem Ausgangswert nicht verändert hatte.

### Beispiel 22

Eine Mischung aus 100 g eines OH-endständigen Polydimethylsiloxans mit einer Viskosität von 1000 mm²/s, 7,15 g Cyanoethyltriethoxysilan und 7,6 g Vinyltriethoxysilan wurde mit 0,2 ml einer 1,0 M-Lösung von TBAF in THF (0,0002 mol F, 38 ppm F, bezogen auf das Gewicht an Hydroxysiloxan) versetzt. Nach dem in Beispiel 19 beschriebenen Vernetzungstest wurde der Endpunkt der Umsetzung bestimmt. Da nach 10 Minuten keine Vergelung mehr an entnommenen Proben eintrat, wurde nach dieser Zeit mit 0,65 ml einer 10 %igen Lösung von Aluminiumtri-sek.butylat in Hexamethyldisiloxan (0,00026 mol Al) desaktiviert. Im ²⁹Si-NMR-Spektrum der Mischung zeigte sich, daß 93,3 % aller SiOH-Funktionen in Si-OSi(OCH₂CH₃)₂-CH₂CH₂-CN und 7,7 % aller SiOH-Funktionen in Si-OSi(OCH₂CH₃)₂-CH=CH₂ umgewandelt worden waren und das Verhältnis der Endgruppen/Dimethylsiloxy-Einheiten sich gegenüber dem Ausgangswert nicht verändert hatte. Das ²⁹Si-NMR-Spektrum einer Probe, die einer 7-tägigen Hitzelagerung bei 70°C in einer verschlossenen Polyethylenflasche unterzogen worden war, zeigte keine Bildung von Monoethoxy-Endgruppen und/oder Verzweigungen.

## Patentansprüche

1. Verfahren zur Herstellung von Organopolysiloxanen, die mindestens eine Einheit der Formel
(R¹O)₃₋ₘRₘSiO_{1/2} (I)
enthalten, worin
R gleich oder verschieden sein kann und Wasserstoffatom oder einwertiger, gegebenenfalls substituierter Kohlenwasserstoffrest bedeutet,
R¹ gleich oder verschieden sein kann und einwertiger, gegebenenfalls substituierter Kohlenwasserstoffrest mit 1 bis 8 Kohlenstoffatomen bedeutet und
m 0, 1 oder 2 ist,
dadurch gekennzeichnet, daß
in einem 1. Schritt
Organosiliciumverbindungen (1), die mindestens eine Si-gebundene Hydroxylgruppe aufweisen, ausgenommen Teilhydrolysate von Silan (2), mit mindestens einem Silan (2) der Formel
(R¹O)₄₋ₘSiRₘ (II)
und/oder dessen Teilhydrolysate,
wobei R, R¹ und m die obengenannte Bedeutung haben, in Gegenwart von Fluoridsalz (3) umgesetzt wird und gegebenenfalls
in einem 2. Schritt
nach beendeter Umsetzung Komponente (4), welche Fluoridionen binden kann, zugesetzt wird.

2. Verfahren nach Anspruch 1, dadurch gekennzeichnet, daß in einem 2. Schritt
nach beendeter Umsetzung Komponente (4), welche Fluoridionen binden kann, zugesetzt wird.

3. Verfahren nach Anspruch 1 oder 2, dadurch gekennzeichnet, daß als mindestens eine Si-gebundene Hydroxylgruppe aufweisende Organosiliciumverbindung (1) solche, ausgewählt aus Organopolysiloxan mit mindestens einer Si-gebundenen Hydroxylgruppe sowie Organosilan mit einer Hydroxylgruppe, eingesetzt wird.

4. Verfahren nach einem oder mehreren der Ansprüche 1 bis 3, dadurch gekennzeichnet, daß Silan (2) und/oder dessen Teilhydrolysate in Mengen von 1,01 bis 10 Mol pro Mol Si-gebundene Hydroxylgruppen der Verbindung (1) eingesetzt wird.

5. Verfahren nach einem oder mehreren der Ansprüche 1 bis 4, dadurch gekennzeichnet, daß als Fluoridsalz (3) solches, ausgewählt aus der Gruppe bestehend aus Ammoniumfluoriden der Formel
[R² ₄N]F (III),
wobei R² gleich oder verschieden sein kann und eine für R angegebene Bedeutung hat, deren Addukte mit Carbonylverbindungen, (Alkali)metallfluoriden, organischen oder anorganischen Ammoniumhydrogenfluoriden, Phosphoniumfluoriden, Phosphoniumhydrogenfluoriden, Tetrafluorboraten, Hexafluorsilicaten und Fluorphosphaten, eingesetzt wird.

6. Verfahren nach einem oder mehreren der Ansprüche 1 bis 5, dadurch gekennzeichnet, daß als Fluoridsalz (3) Ammoniumfluoride der Formel (III) eingesetzt werden.

7. Verfahren nach einem oder mehreren der Ansprüche 1 bis 6, dadurch gekennzeichnet, daß Fluoridsalz (3) in Mengen von 0,1 bis 1000 ppm (Gewichtsteilen je Million Gewichtsteilen), berechnet als elementares Fluor und bezogen auf das Gesamtgewicht an hydroxylfunktioneller Organosiliciumverbindung (1), eingesetzt wird.

8. Verfahren nach einem oder mehreren der Ansprüche 2 bis 7, dadurch gekennzeichnet, daß es sich bei Komponente (4) um Aluminiumverbindungen bzw. -komplexe handelt.

9. Verfahren nach Anspruch 8, dadurch gekennzeichnet, daß es sich bei Komponente (4) um Aluminiumalkoholate handelt.

10. Verfahren nach Anspruch 8 oder 9, dadurch gekennzeichnet, daß Aluminiumverbindung bzw. -komplex in Mengen von 1,05 bis 3 Mol Aluminium pro Mol Fluorid der Komponente (3) eingesetzt wird.

## Claims

1. Process for the preparation of organopolysiloxanes which contain at least one unit of the formula
(R¹O)₃₋ₘRₘSiO_{1/2} (I)
in which
R can be identical or different and is a hydrogen atom or monovalent, optionally substituted hydrocarbon radical,
R¹ can be identical or different and is a monovalent, optionally substituted hydrocarbon radical having 1 to 8 carbon atoms and
m is 0, 1 or 2,
characterized in that, in a 1st step, organosilicon compounds (1) which contain at least one Si-bonded hydroxyl group, excluding partial hydrolysates of silane (2), are reacted with at least one silane (2) of the formula
(R¹O)₄₋ₘSiRₘ (II)
and/or partial hydrolysates thereof,
in which R, R¹ and m has [sic] the abovementioned meaning,
in the presence of a fluoride salt (3), and, if appropriate, in a 2nd step, when the reaction has ended, component (4) which can bond fluoride ions is added.

2. Process according to Claim 1, characterized in that, in a 2nd step, when the reaction has ended, component (4) which can bond fluoride ions is added.

3. Process according to Claim 1 or 2, characterized in that the organosilicon compound (1) containing at least one Si-bonded hydroxyl group is one chosen from organopolysiloxane having at least one Si-bonded hydroxyl group and organosilane having a hydroxyl group.

4. Process according to one or more of Claims 1 to 3, characterized in that the silane (2) and/or partial hydrolysates thereof are employed in amounts of 1.01 to 10 mol per mole of Si-bonded hydroxyl groups of the compound (1).

5. Process according to one or more of Claims 1 to 4, characterized in that the fluoride salt (3) employed is one chosen from the group consisting of ammonium fluorides of the formula
[R² ₄N]F (III)
in which R² can be identical or different and has one of the meanings given for R, adducts thereof with carbonyl compounds, (alkali) metal fluorides and organic or inorganic ammonium hydrogen fluorides, phosphonium fluorides, phosphonium hydrogen fluorides, tetrafluoroborates, hexafluorosilicates and fluorophosphates.

6. Process according to one or more of Claims 1 to 5, characterized in that the fluoride salt (3) employed comprises ammonium fluorides of the formula (III).

7. Process according to one or more of Claims 1 to 6, characterized in that the fluoride salt (3) is employed in amounts of 0.1 to 1000 ppm (parts by weight per million parts by weight), calculated as elemental fluorine and based on the total weight of hydroxyfunctional organosilicon compound (1).

8. Process according to one or more of Claims 2 to 7, characterized in that component (4) comprises aluminium compounds or complexes.

9. Process according to Claim 8, characterized in that component (4) comprises aluminium alcoholates.

10. Process according to Claim 8 or 9, characterized in that the aluminium compound or complex is employed in amounts of 1.05 to 3 mol of aluminium per mole of fluoride of component (3).

## Revendications

1. Procédé de préparation d'organopolysiloxanes, qui contiennent au moins une unité de formule
(R¹O)₃₋ₘRₘSiO_{1/2} (I)
dans laquelle
R peut être identique ou différent et représente un atome d'hydrogène ou un radical hydrocarbure monovalent, facultativement substitué;
R¹ peut être identique ou différent et représente un radical hydrocarbure monovalent, facultativement substitué avec 1 à 8 atomes de carbone, et
m est 0, 1 ou 2,
caractérisé en ce que
dans une première étape
on fait réagir des composés organosiliciés (1), qui présentent au moins un radical hydroxyle à liaison Si, à l'exclusion des hydrolysats partiels du silane (2), avec au moins un silane (2) de formule
(R¹O)₄₋ₘSiRₘ (II)
et/ou leurs hydrolysats partiels,
où R, R¹ et m ont la signification précédente,
en présence d'un fluorure (3), et facultativement dans une deuxième étape
après achèvement de la réaction, on ajoute le composant (4) qui peut se lier aux ions fluorure.

2. Procédé suivant la revendication 1, caractérisé en ce que
dans une deuxième étape
après achèvement de la réaction, on ajoute le composant (4) qui peut se lier aux ions fluorure.

3. Procédé suivant la revendication 1 ou 2, caractérisé en ce que l'on utilise comme composés organosiliciés (1) présentant au moins un radical hydroxyle à liaison Si, ceux choisis parmi les organopolysiloxanes avec au moins un radical hydroxyle à liaison Si ainsi que les organosilanes avec un radical hydroxyle.

4. Procédé suivant l'une ou plusieurs des revendications 1 à 3, caractérisé en ce que l'on utilise le silane (2) et/ou son hydrolysat partiel en des quantités de 1,01 à 10 moles par mole de radical hydroxyle à liaison Si du composé (1).

5. Procédé suivant l'une ou plusieurs des revendications 1 à 4, caractérisé en ce que l'on utilise comme fluorures (3), ceux choisis dans le groupe constitué des fluorures d'ammonium de formule
[R² ₄N]F (III)
où R² peut être identique ou différent et a une signification donnée pour R, leurs adduits avec des composés carbonylés, des fluorures métalliques (alcalins), des hydrogénofluorures d'ammonium organiques ou inorganiques, des fluorures de phosphonium, des hydrogénofluorures de phosphonium, le tétrafluoroborate, des hexafluorosilicates et des fluorophosphates.

6. Procédé suivant l'une ou plusieurs des revendications 1 à 5, caractérisé en ce que l'on utilise comme fluorures (3), les fluorures d'ammonium de formule (III).

7. Procédé suivant l'une ou plusieurs des revendications 1 à 6, caractérisé en ce que l'on utilise le fluorure (3), en des quantités de 0,1 à 1000 ppm (parties en poids par million de parties en poids), caractérisé sous forme de fluor élémentaire et sur base du poids total du composé organosilicié (1) hydroxyfonctionnel.

8. Procédé suivant l'une ou plusieurs des revendications 2 à 7, caractérisé en ce que le composant (4) consiste en un composé ou complexe de l'aluminium.

9. Procédé suivant la revendication 8, caractérisé en ce que le composant (4) consiste en un alcoolate d'aluminium.

10. Procédé suivant la revendication 8 ou 9, caractérisé en ce que l'on introduit le composé ou complexe de l'aluminium en des quantités de 1,05 à 3 moles d'aluminium par mole de fluorure de composant (3).
